# EUROPEAN PATENT SPECIFICATION

(11) **EP 2 115 289 B1**
(45) Date of publication and mention of the grant of the patent: **25.03.2015**
(21) Application number: 06850520.5
(22) Date of filing: 12.10.2006
(51) Int. Cl.: F02K 1/06, F02K 3/06

(54) **GAS TURBINE ENGINE WITH FAN VARIABLE AREA NOZZLE HAVING ROTATING OVERLAPPING TABS**
GASTURBINENTRIEBWERK MIT VARIABLER BLÄSER DÜSE MIT ÜBERLAPPENDEN DREHBAREN SEGMENTEN
MOTEUR À TURBINE À GAZ À TUYÈRE DE SOUFFLANTE À SECTION VARIABLE À SEGMENTS ROTATIFS SUPERPOSÉS

(43) Date of publication of application: 11.11.2009
(73) Proprietor: United Technologies Corporation, Hartford, CT 06101 (US)
(72) Inventor: MIGLIARO, JR., Edward F., Marlborough, CT 06447 (US)
(74) Representative: Leckey, David Herbert
(86) International application number: PCT/US2006/040248
(87) International publication number: WO 2008/045090

(56) References cited:
- EP-A- 0 540 193
- EP-A- 1 580 418
- WO-A-2007/122368
- GB-A- 2 372 779

## Description

The present invention relates to a gas turbine engine, and more particularly to a turbofan engine having a fan variable area nozzle which sections that selectively rotate to change an overlap and change a bypass flow path area thereof.

Conventional gas turbine engines generally include a fan section and a core engine with the fan section having a larger diameter than that of the core engine. The fan section and the core engine are disposed about a longitudinal axis and are enclosed within an engine nacelle assembly.

Combustion gases are discharged from the core engine through a primary airflow path and are exhausted through a core exhaust nozzle. An annular fan flow path, disposed radially outwardly of the primary airflow path, passes through a radial outer portion between a fan nacelle and a core nacelle and is discharged through an annular fan exhaust nozzle defined at least partially by the fan nacelle and the core nacelle to generate fan thrust. A majority of propulsion thrust is provided by the pressurized fan air discharged through the fan exhaust nozzle, the remaining thrust provided from the combustion gases discharged through the core exhaust nozzle.

The fan nozzles of conventional gas turbine engines have fixed geometry. The fixed geometry fan nozzles must be suitable for take-off and landing conditions as well as for cruise conditions. However, the requirements for take-off and landing conditions are different from requirements for the cruise condition. Optimum performance of the engine may be achieved during different flight conditions of an aircraft by tailoring the fan exhaust nozzle for the specific flight regimes.

Accordingly, it is desirable to provide an effective, lightweight fan variable area nozzle for a gas turbine engine.

A gas turbine engine having the features of the preamble of claim 1 is disclosed in GB-A-2372779.

### SUMMARY OF THE INVENTION

A gas turbine engine according to the present invention is set forth in claim 1.

The rotationally overlapped nozzle assembly changes the physical area and geometry of the bypass flow path during particular flight conditions. The bypass flow is effectively altered by rotation of the second tab section relative the first tab section between a closed position and an open position. The rotationally overlapped nozzle assembly is closed by rotating the second tab section relative to the first tab section such that the second tab section is out of phase with the first tab section such that the second tab section is interspersed with the first tab section. The rotationally overlapped nozzle assembly is opened by rotating the second tab section relative to the first tab section such that the second tab section is aligned with the first tab section such that the second tab section is overlapped with the first tab section to increase the effective area to the fan nozzle exit area.

In operation, the FVAN communicates with the controller to rotate the rotationally overlapped nozzle assembly to effectively vary the area defined by the fan nozzle exit area. By adjusting the entire periphery of the FVAN in which all segments are moved simultaneously, engine thrust and fuel economy are maximized during each flight regime by varying the fan nozzle exit area. By separately adjusting circumferential sectors of the FVAN or individual second tab segments to provide an asymmetrical fan nozzle exit area, engine bypass flow is selectively vectored.

The present invention therefore provides an effective, lightweight fan variable area nozzle for a gas turbine engine.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic partial fragmentary view of an exemplary gas turbine engine embodiment for use with the present invention with the FVAN ;
Figure 1B is a perspective partial fragmentary view of the engine;
Figure 1C is a rear view of the engine with the FVAN in an asymmetric condition;
Figure 2A is a side view of the FVAN in an open position; and
Figure 2B is a side view of the FVAN in a closed position

### DETAILED DESCRIPTION OF THE PREFERRED EMBODIMENT

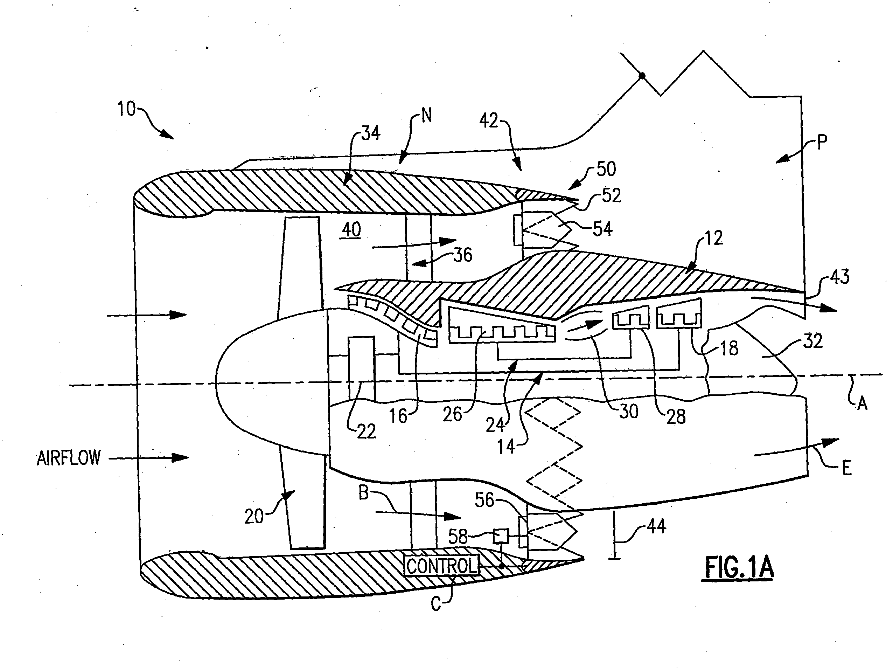

Figure 1A illustrates a general partial fragmentary schematic view of a gas turbofan engine 10 suspended from an engine pylon P within an engine nacelle assembly N as is typical of an aircraft designed for subsonic operation.

The turbofan engine 10 includes a core engine within a core nacelle 12 that houses a low spool 14 and high spool 24. The low spool 14 includes a low pressure compressor 16 and low pressure turbine 18. The low spool 14 drives a fan section 20 through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 is a high-bypass geared turbofan aircraft engine. Preferably, the engine 10 bypass ratio is greater than ten (10), the turbofan diameter is significantly larger than that of the low pressure compressor 16, and the low pressure turbine 18 has a pressure ratio that is greater than 5. The gear train 22 is preferably an epicycle gear train such as a planetary gear system or other gear system with a gear reduction ratio of greater than 2.5. It should be understood, however, that the above parameters are only exemplary of a preferred geared turbofan engine and that the present invention is likewise applicable to other geared turbofan engines.

Airflow enters a fan nacelle 34, which at least partially surrounds the core nacelle 12. The fan section 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation with, respective, spools 24, 14 to rotationally drive the compressors 26, 16 and through the gear train 22, the fan section 20 in response to the expansion. A core engine exhaust E exits the core nacelle 12 through a core nozzle 43 defined between the core nacelle 12 and a tail cone 32.

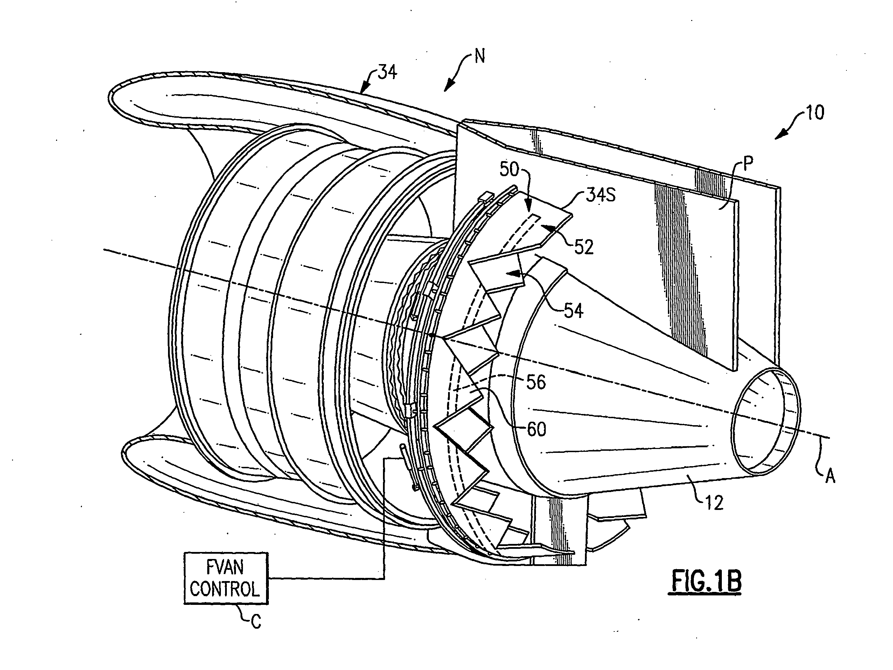

The core nacelle 12 is supported within the fan nacelle 34 by structure 36 often generically referred to as an upper and lower bifurcation. A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40 and is discharged from the engine 10 through a fan variable area nozzle (FVAN) 42 (also illustrated in Figure 1B) which defines a nozzle exit area 44 between the fan nacelle 34 and the core nacelle 12 at a fan nacelle end segment 34S of the fan nacelle 34 downstream of the fan section 20.

Thrust is a function of density, velocity, and area. One or more of these parameters can be manipulated to vary the amount and direction of thrust provided by the bypass flow B. The FVAN 42 rotates to effectively vary the area of the fan nozzle exit area 44 to selectively adjust the pressure ratio of the bypass flow B in response to a controller C.

A significant amount of thrust is provided by the bypass flow B due to the high bypass ratio. The fan section 20 of the engine 10 is preferably designed for a particular flight condition -- typically cruise at 0.8M and 35,000 feet. As the fan section 20 are efficiently designed at a particular fixed stagger angle for an efficient cruise condition, the FVAN 42 is operated to effectively vary the fan nozzle exit area 44 to adjust fan bypass air flow such that the angle of attack or incidence on the fan blades is maintained close to the design incidence for efficient engine operation at other flight conditions, such as landing and takeoff thus providing optimized engine operation over a range of flight conditions with respect to performance and other operational parameters such as noise levels. The FVAN 42 preferably provides an approximately 20% (twenty percent) change in area of the fan exit nozzle area 44.

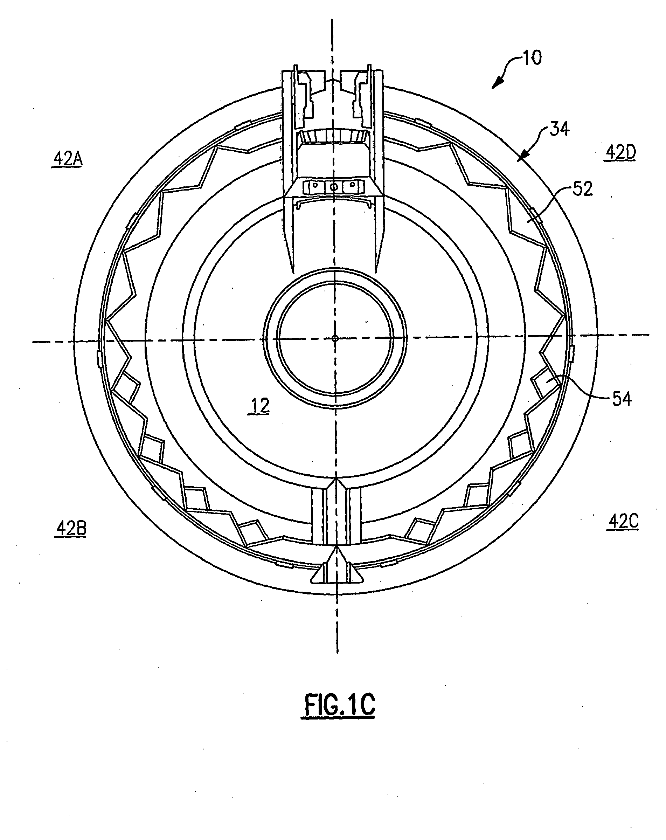

The FVAN 42 is preferably separated into four sectors 42A-42D (Figure 1 C) which are each independently adjustable to asymmetrically vary the fan nozzle exit area 44 to generate vectored thrust. It should be understood that although four segments are illustrated, any number of segments may alternatively or additionally be provided.

The FVAN 42 generally includes a rotationally overlapped nozzle assembly 50 having a first tab section 52 and a second tab section 54 rotationally mounted within the first tab section 52. The second tab section 54 rotates about the engine axis A relative the fixed first tab section 52 to change the effective area of the fan nozzle exit area 44. The second tab segment preferably rotates upon a circumferential track 56 (illustrated schematically) in response to an actuator 58.

The first tab section 52 preferably includes a multiple of first tab segments 60 which are chevron-shaped to define an essentially saw-tooth fan nacelle end segment 34S (Figure 1 B). The second tab section 54 includes a multiple of second tab segments 62 which are also chevron-shaped to define an essentially saw-tooth inner section of the fan nacelle end segment 34S (Figure 1B), The second tab section 54 may be a complete annular ring or may be further subdivided into sections which include a multiple of tab segments 60, 62 which are operable in an independent and individual manner.

The multiple of second tab segments 62 preferably define an annular member which is rotatable as a unit relative the fixed first tab section 52. Alternatively, the second tab segments 62 may be individually operated or operated in groups such as the being divided into a multiple of sectors 42A-42D (Figure 1C; sectors 42B and 42C shown closed) to facilitate thrust vectoring operations.

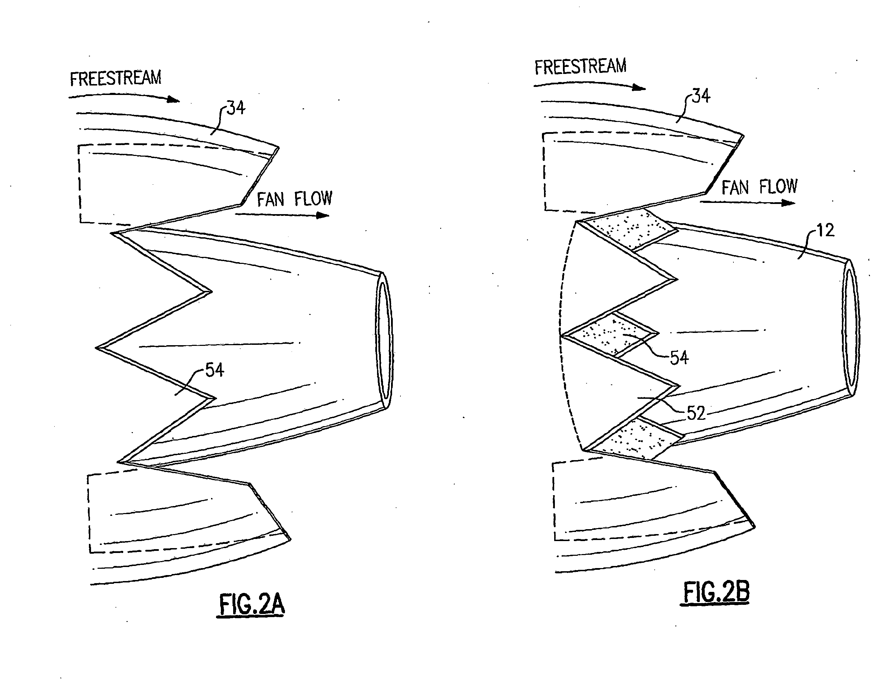

The rotationally overlapped nozzle assembly 50 changes the physical area and geometry of the bypass flow path 40 during particular flight conditions. The bypass flow B is effectively altered by rotation of the second tab section 54 relative the first tab section 52 between a closed position and an open position. Preferably, the rotationally overlapped nozzle assembly 50 is closed by rotating the second tab section 54 relative to the first tab section 52 such that the second tab section 54 is circumferentially rotationally displaced and interspersed with the first tab section 52 (Figure 2B). The rotationally overlapped nozzle assembly 50 is opened by rotating the second tab section 54 relative to the first tab section 52 such that the second tab section 54 is aligned and overlapped with the first tab section 52 to provide an increased effective area to the fan nozzle exit area 44.

In operation, the FVAN 42 communicates with the controller C to rotate the rotationally overlapped nozzle assembly 50 to effectively vary the area defined by the fan nozzle exit area 44. Other control systems including an engine controller or an aircraft flight control system may also be usable with the present invention. By adjusting the entire periphery of the FVAN 42 in which all segments are moved simultaneously, engine thrust and fuel economy are maximized during each flight regime by varying the fan nozzle exit area. By separately adjusting the circumferential sectors of the FVAN 42 or individual second tab segments 62 to provide an asymmetrical fan nozzle exit area 44, engine bypass flow is selectively vectored to provide, for example only, trim balance, thrust controlled maneuvering, enhanced ground operations and short field performance.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A gas turbine engine (10) comprising:
a core engine defined about an axis (A);
a turbofan (20) driven about said axis (A);
a core nacelle (12) defined at least partially about said core engine;
a fan nacelle (34) mounted at least partially around said core nacelle (12) to define a fan bypass flow path (34); and
a fan variable area nozzle (42) in communication with said fan bypass flow path (40), said fan variable area nozzle (42) having a first tab section (52) and a second tab section (54), said second tab section (54) rotatable about said axis (A) relative to said first tab section (52) to vary a fan nozzle exit area (44) between a closed position and an open position, and wherein said first tab section (52) comprises a multiple of first tab segments (60) and said second tab section (54) comprises a multiple of second tab segments (62); **characterised in that**:
said first tab segments (60) and said second tab segments (62) are chevron-shaped, and wherein said first tab section (52) and said second tab section (54) define a trailing edge of said fan variable area nozzle (40), said trailing edge defining a saw-tooth fan nacelle end segment (34S) in said closed position and said open position; and
by further comprising a gear system (22) driven by said core engine, said turbofan (20) being driven by said gear system (22).

2. The engine as recited in claim 1, further comprising a controller (C) in communication with said second tab section (54) to selectively rotate said second tab section (54) about said axis relative to said first tab section (52) to vary said fan nozzle exit area (44) in response to a flight condition.

3. The engine as recited in claim 1 or 2, wherein said second tab section (54) is at least partially alignable with said first tab section (52) about said axis (A) to define an at least partially open position of said fan nozzles exit area (44).

4. The engine as recited in claim 1, 2 or 3, wherein said second tab section (54) is at least partially rotationally offset relative said first tab section (52) about said axis (A) to define an at least partially closed position of said fan nozzle exit area (44).

## Patentansprüche

1. Gasturbinentriebwerk (10), umfassend:
ein Kerntriebwerk, das um eine Achse (A) definiert ist;
ein Turbogebläse (20), das um die Achse (A) angetrieben wird;
eine Kerngondel (12), die wenigstens teilweise um das Kerntriebwerk definiert ist;
eine Gebläsegondel (34), die wenigstens teilweise um die Kerngondel (12) angebracht ist, um einen Gebläseumleitströmungsweg (34) zu definieren; und
eine Gebläsedüse mit variabler Fläche (42) in Verbindung mit dem Gebläseumleitströmungsweg (40), wobei die Gebläsedüse mit variabler Fläche (42) einen ersten Laschenabschnitt (52) und einen zweiten Laschenabschnitt (54) aufweist, wobei der zweite Laschenabschnitt (54) relativ zum ersten Laschenabschnitt (52) um die Achse (A) drehbar ist, um einen Gebläsedüsenaustrittsbereich (44) zwischen einer geschlossenen Stellung und einer offenen Stellung zu variieren, und wobei der erste Laschenabschnitt (52) eine Vielzahl von ersten Laschensegmenten (60) umfasst und der zweite Laschenabschnitt (54) eine Vielzahl von zweiten Laschensegmenten (60) umfasst; **dadurch gekennzeichnet, dass**:
die ersten Laschensegmente (60) und die zweiten Laschensegmente (62) sparrenförmig sind, und wobei der erste Laschenabschnitt (52) und der zweite Laschenabschnitt (54) eine Hinterkante der Gebläsedüse mit variabler Fläche (40) definieren, wobei die Hinterkante in der geschlossenen Stellung und der offenen Stellung eine Sägezahngebläsegondelendsegment (34S) definiert; und
dadurch, dass es ferner ein Getriebesystem (22) umfasst, das von dem Kerntriebwerk angetrieben wird, wobei das Turbogebläse (20) von dem Getriebesystem (22) angetrieben wird.

2. Triebwerk nach Anspruch 1, ferner umfassend eine Steuereinrichtung (C) in Verbindung mit dem zweiten Laschenabschnitt (54), um den zweiten Laschenabschnitt (54) relativ zum ersten Laschenabschnitt (52) selektiv um die Achse zu drehen, um den Gebläsedüsenaustrittsbereich (44) als Reaktion auf eine Flugbedingung zu variieren.

3. Triebwerk nach Anspruch 1 oder 2, wobei der zweite Laschenabschnitt (54) wenigstens teilweise um die Achse (A) an dem ersten Laschenabschnitt (52) ausrichtbar ist, um eine wenigstens teilweise offene Stellung des Gebläsedüsenaustrittsbereichs (44) zu definieren.

4. Triebwerk nach Anspruch 1, 2 oder 3, wobei der zweite Laschenabschnitt (54) wenigstens teilweise relativ zum ersten Laschenabschnitt (52) um die Achse (A) drehend versetzt ist, um eine wenigstens teilweise geschlossene Stellung des Gebläsedüsenaustrittsbereichs (44) zu definieren.

## Revendications

1. Moteur de turbine à gaz (10) comprenant :
un moteur central défini autour d'un axe (A) ;
une réacteur à double flux (20) entraîné autour dudit axe (A) ;
une nacelle centrale (12) définie au moins en partie autour dudit moteur central ;
une nacelle de soufflante (34) montée au moins en partie autour de ladite nacelle centrale (12) pour définir une voie d'écoulement de contournement de soufflante (34) ; et
une tuyère à surface variable de soufflante (42) en communication avec ladite voie d'écoulement de contournement de soufflante (40), ladite tuyère à surface variable de soufflante (42) comportant une première partie formant une patte (52) et une deuxième partie formant une patte (54), ladite deuxième partie formant une patte (54) pouvant tourner autour dudit axe (A) par rapport à ladite première partie formant une patte (52) pour faire varier une surface de sortie de tuyère de soufflante (44) entre une position fermée et une position ouverte, et où ladite première partie formant une patte (52) comprend une pluralité de premiers segments de patte (60) et où ladite deuxième partie formant une patte (54) comprend une pluralité de deuxièmes segments de patte (62) ; **caractérisé en ce que** :
lesdits premiers segments de patte (60) et lesdits deuxièmes segments de patte (62) sont en forme de chevrons, et ladite première partie formant une patte (52) et ladite deuxième partie formant une patte (54) définissent un bord de traîne de ladite tuyère à surface variable de soufflante (40), ledit bord de traîne définissant un segment d'extrémité de nacelle de soufflante en dents de scie (34S) dans ladite position fermée et dans ladite position ouverte ; et
par le fait de comprendre en outre un système d'engrenages (22) entraîné par ledit moteur central, ledit réacteur à double flux (20) étant entraîné par ledit système d'engrenages (22).

2. Moteur selon la revendication 1, comprenant en outre un contrôleur (C) en communication avec ladite deuxième partie formant une patte (54) afin de faire tourner de manière choisie ladite deuxième partie formant une patte (54) autour dudit axe par rapport à ladite première partie formant une patte (52) afin de faire varier ladite surface de sortie de tuyère de soufflante (44) en réponse à un état de vol.

3. Moteur selon la revendication 1 ou 2, dans lequel ladite deuxième partie formant une patte (54) est au moins en partie alignable avec ladite première partie formant une patte (52) autour dudit axe (A) pour définir une position au moins en partie ouverte de ladite surface de sortie de tuyère de soufflante (44).

4. Moteur selon la revendication 1, 2 ou 3, dans lequel ladite deuxième partie formant une patte (54) est au moins en partie décalée en rotation par rapport à ladite première partie formant une patte (52) autour dudit axe (A) pour définir une position au moins en partie fermée de ladite surface de sortie de tuyère de soufflante (44).
